# EUROPEAN PATENT SPECIFICATION

(11) **EP 4 442 399 B1**
(45) Date of publication and mention of the grant of the patent: **08.04.2026**
(21) Application number: 24159986.9
(22) Date of filing: 27.02.2024
(51) Int. Cl.: B23K 9/10, B23K 9/12, B23K 9/167

(54) **METHODS AND APPARATUS TO CONTROL TIG WELDING**
VERFAHREN UND VORRICHTUNG ZUR STEUERUNG DES WIG-SCHWEISSENS
PROCÉDÉS ET APPAREIL DE COMMANDE DE SOUDAGE TIG

(30) Priority: 27.02.2023 US 202363487191 P; 26.02.2024 US 202418587639
(43) Date of publication of application: 09.10.2024
(60) Divisional application: 25168386.8
(73) Proprietor: Illinois Tool Works Inc., Glenview IL 60025 (US)
(72) Inventor: ALBRECHT, Bruce P, Glenview, 60025 (US)
(74) Representative: HGF

(56) References cited:
- GB-A- 727 484
- US-A- 2 778 099

## Description

### FIELD OF THE DISCLOSURE

This disclosure relates generally to welding and, more particularly, to methods and apparatus to control TIG welding.

### BACKGROUND

Tungsten inert gas (TIG) welding, also called gas tungsten arc welding (GTAW), is a lower energy, precision welding process relative to other types of welding processes. Due to the manual coordination involved in TIG welding, TIG welding can be more difficult for weld operators to become proficient. Document US2778099 discloses a system in accordance with the preamble of claim 1 and a method in accordance with the preamble of claim 10.

### SUMMARY

A welding system and a method of performing welding are provided in accordance with the invention as set forth in the independent claims 1 and 10.

### BRIEF DESCRIPTION OF THE DRAWINGS

Figure 1A illustrates an example welding system including a welding power supply configured to convert input power to welding power and preheating power, in accordance with aspects of this disclosure.
Figure 1B illustrates another example welding system including a welding power supply configured to convert input power to welding power and a preheating power supply configured to convert input power to preheating power, in accordance with aspects of this disclosure.
Figure 2 is a block diagram of an example implementation of the power supplies of Figure 1B.
Figure 3 illustrates an example user interface that may be used to input properties for determining parameters to control TIG welding.
Figure 4 is a control diagram that may be implemented by the control circuitry of Figures 1A, 1B, and/or 2, illustrating an example parameter determination for TIG welding parameters.
Figure 5 is a flowchart representative of an example method which may be performed using the example welding systems of Figures 1A, 1B, and/or 2 to control TIG welding.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Tungsten Inert Gas (TIG) welding (also referred to as Gas Tungsten Arc Welding, or GTAW), is a relatively low-productivity process, but provides very good results in precise welding applications and can accommodate many alloys. TIG welding is also difficult to learn. A welder must learn to melt the base metal and add filler with a dabbing motion when the plate is melted, which requires good hand-eye coordination and practice.

Because conventional TIG processes have limited energy density within the welding arc (e.g., relative to Gas Metal Arc Welding (GMAW), Shielded Metal Arc Welding (SMAW), and/or other welding processes), productivity and travel speed are slower. The geometry of the non-consumable electrode (e.g., the grind angle of the electrode) and/or the use of techniques such as high-frequency AC waveforms can improve energy density but not to the level of GMAW or SMAW.

Disclosed methods and apparatus significantly improve the ease of learning and use of TIG processes, and/or can improve travel speed and productivity of TIG processes. Disclosed example methods and apparatus configure a welding wire for delivery to the workpiece such that the wire both applies a force to push the welding torch at a relatively consistent travel speed and allows the welding arc to melt the welding wire. To deliver the welding wire under such conditions, disclosed example methods and apparatus control the wire feed speed to adequately fill the joint while moving the torch at a speed that provides acceptable results for the TIG process. For example, the delivered wire may be preheated by the arc and/or by a wire preheater to a temperature that both maintains column strength of the welding wire but allows the welding arc and/or the weld puddle to complete the melting of the welding wire into the weld puddle. A welding wire temperature that is too high (e.g., for a given welding current) causes the welding wire to lose column strength and pushing force, while a welding wire temperature that is too low will result in a failure to melt the welding wire.

Disclosed example method and apparatus control and/or adjust the TIG process to a base material thickness so that the TIG torch is now pushed by the welding wire at a travel speed that is tuned (e.g., using a wire entry angle, a wire feed speed, wire preheating energy, and wire diameter) for the material thickness.

In some examples, the angle of entry of the wire to the workpiece can be adjusted to tune the travel speed. For example, a wire directed at the workpiece at a larger (shallower, more obtuse) angle (e.g., 40 degrees from perpendicular to the workpiece) will push the torch faster than a wire introduced at sharper (steeper) angle (e.g., 20 degrees from perpendicular to the workpiece). Because the wire is at least partially preheated by the arc plasma column, the wire is preheated more at steeper entry angles, thereby heating the wire closer to a melting temperature, than at shallower entry angles. The angle of entry of the wire may also be used to determine other parameters, such as arc current, wire preheating energy, and/or wire feed speed, and/or may affect the wire diameter to be used.

In accordance with the invention, a wire preheater preheats the wire prior to introduction to the plasma column. For example, the wire preheater may preheat the wire based on current, voltage, energy, enthalpy, and/or other target parameters, to make the wire more readily consumed into the base plate. In some examples, the wire preheater may be controlled to make the travel speed faster or slower by adjusting the temperature of the wire at entry to the arc plasma, thereby adjusting the force applied by the wire to push the welding torch in the travel direction.

In some examples, the weld operator may be required to change the wire diameter based on the desired travel speed. For example, a small diameter wire coming in at a high wire feed speed may cause too fast of a torch travel speed. By using a larger wire at a slower wire feed speed, the torch travel speed can be reduced while providing the desired mass of filler metal.

In some examples, the TIG torch may be further provided with a standoff to provide a consistent distance between the non-consumable electrode and the workpiece, and/or provide a lower distance limit on the distance between the non-consumable electrode and the workpiece. The standoff further improves the ease of use by allowing the operator to drag the TIG torch over the workpiece at a consistent distance provided by the standoff and a consistent travel speed provided by the welding wire.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

As used herein, preheating refers to heating the electrode wire prior to a welding arc and/or deposition in the travel path of the electrode wire.

Some disclosed examples describe electric currents being conducted "from" and/or "to" locations in circuits and/or power supplies. Similarly, some disclosed examples describe "providing" electric current via one or more paths, which may include one or more conductive or partially conductive elements. The terms "from," "to," and "providing," as used to describe conduction of electric current, do not necessitate the direction or polarity of the current. Instead, these electric currents may be conducted in either direction or have either polarity for a given circuit, even if an example current polarity or direction is provided or illustrated.

Disclosed example welding systems include: a welding torch including a non-consumable electrode configured to establish an arc between the non-consumable electrode and a workpiece; a wire feeder coupled to the welding torch and configured to direct a welding wire toward the workpiece at a location of the arc; and control circuitry configured to control at least one of a current to the arc, a wire feed speed of the welding wire, or preheat energy applied to the welding wire, to deliver the welding wire to the workpiece such that the welding wire applies a physical force to the workpiece prior to melting to push the welding torch along the workpiece.

The welding systems of the invention further include a wire preheater configured to apply the preheat energy to the welding wire, wherein the control circuitry is configured to control the preheat energy applied to the welding wire based on the wire feed speed of the welding wire and a wire diameter of the welding wire. In some example welding systems, the control circuitry is configured to determine the at least one of the current to the arc, the wire feed speed of the welding wire, or the preheat energy applied to the welding wire based on a property of the workpiece. In some example welding systems the property of the workpiece includes a workpiece thickness, a joint type, or a joint dimension.

In some example welding systems, the control circuitry is configured to: determine a travel speed based on a property of the workpiece and the current to the arc; and determine the wire feed speed and the preheat energy based on the travel speed and a diameter of the welding wire. In some example welding systems, the control circuitry is configured to determine the preheat energy based on a type of the welding wire.

Some example welding systems further include a wire nozzle attached to the welding torch and configured to direct the welding wire from the wire feeder toward the workpiece. In some example welding systems, the control circuitry is configured to determine the at least one of the current to the arc, the wire feed speed of the welding wire, or the preheat energy applied to the welding wire based on an angle between the non-consumable electrode and the wire nozzle.

Some example welding systems further include a standoff attached to the welding torch, in which the standoff is positioned to set a lower distance limit between the non-consumable electrode and the workpiece. Some example welding systems further include an input device configured to provide an input signal to the control circuitry, the control circuitry configured to adjust the at least one of the current to the arc, the wire feed speed of the welding wire, or the preheat energy applied to the welding wire.

Disclosed example methods to perform welding include: selecting an arc current to be provided by a non-consumable electrode of a welding torch, a welding wire having a wire diameter, and a wire feed speed of the welding wire; initiating welding of a workpiece using the non-consumable electrode; and guiding the welding torch while delivery of the welding wire to the workpiece pushes the welding torch along the workpiece (44), and controlling a preheat energy applied to the welding wire (54) based on the wire feed speed of the welding wire (54) and a wire diameter of the welding wire (54).

Some example methods further include adjusting an angle between the wire and the workpiece to change a push force of the welding wire on the workpiece.

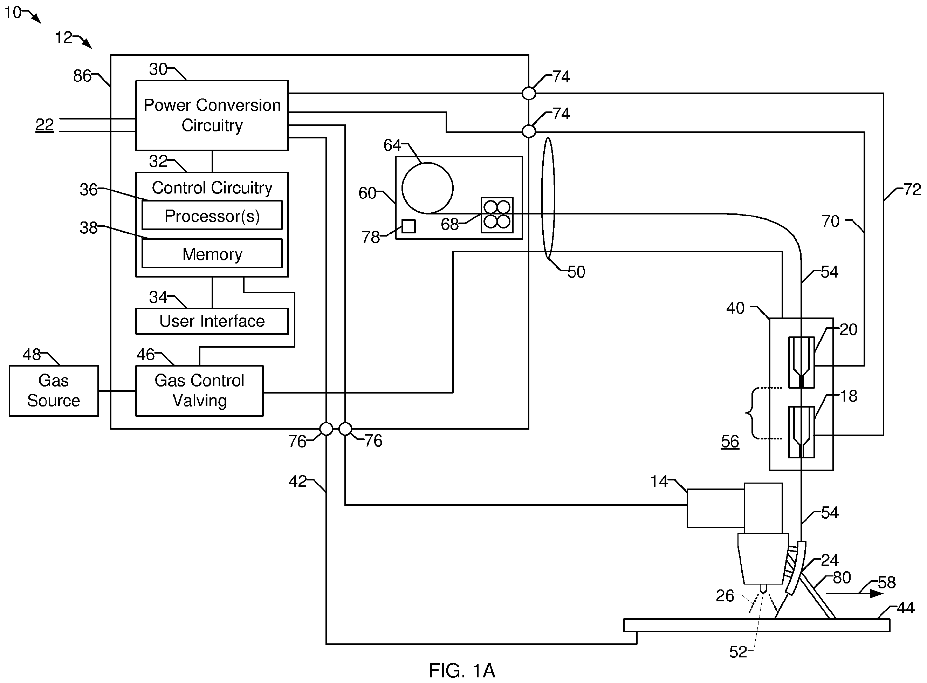

Figure 1A illustrates an example TIG welding system 10, including a welding power supply 12 configured to convert input power to welding power and preheating power. The example welding system 10 of Figure 1A includes the welding power supply 12 and a welding torch 14. The welding torch 14 is a TIG torch (also referred to as GTAW), including a non-consumable electrode. As used herein, a "non-consumable electrode" refers to a welding electrode which is not consumed as part of welding, in contrast with wire-fed welding in which the electrode is consumed as part of producing the welding arc.

The welding power supply 12 converts the input power from a source of primary power 22 to one or both of output welding power and/or preheating power. The welding power (e.g., current) is output to the welding torch 14. In the example of Figure 1A, the welding power source also supplies the welding wire 54 to a wire nozzle 24 attached to the welding torch 14.

The welding power supply 12 is coupled to, or includes, the source of primary power 22, such as an electrical grid or engine-driven generator that supplies primary power, which may be single-phase or three-phase AC power. For example, the welding power supply 12 may be an engine-driven welding power source that includes the engine and generator that provides the primary power 22 within the welding power supply 12. The welding power supply 12 may process the primary power 22 to output welding-type power for output to the welding torch 14 via an torch cable 50.

Power conversion circuitry 30 converts the primary power (e.g., AC power) to welding-type power as either direct current (DC) or AC, and to preheating power. Example preheating power may include DC and/or AC electrical current that provides resistive, or Joule, heating when conducted through a portion of the electrode wire 54. Additional examples of preheating power disclosed herein may include high frequency AC current that provides inductive heating within the electrode wire 54, and/or power suitable for hotwire techniques, arc-based preheating in which an electrical arc is used to apply heat to the wire prior to the welding arc, laser-based preheating, radiant heating, convective heating, and/or any other forms of wire heating. The power conversion circuitry 30 may include circuit elements such as transformers, switches, boost converters, inverters, buck converters, half-bridge converters, full-bridge converters, forward converters, flyback converters, an internal bus, bus capacitor, voltage and current sensors, and/or any other topologies and/or circuitry to convert the input power to the welding power and the preheating power, and to output the welding power and the preheating power to the torch 14. Example implementations of the power conversion circuitry 30 are disclosed below in more detail.

The first and second portions of the input power may be divided by time (e.g., the first portion is used at a first time and the second portion is used at a second time) and/or as portions of the total delivered power at a given time. The power conversion circuitry 30 outputs the welding power to a weld circuit, and outputs the preheating power to a preheating circuit or other preheater. The weld circuit and the preheating circuit may be implemented using any combination of the welding torch 14, a weld accessory, and/or the power supply 12.

The power conversion circuitry 30 may include circuit elements such as boost converters. In some examples, the primary power 22 received by the power conversion circuitry 30 is an AC voltage between approximately 110V and 575V, between approximately 110V and 480V, or between approximately 110V and 240V. As used in reference to the input power, the term approximately may mean within 5 volts or within 10 percent of the desired voltage.

The power conversion circuitry 30 may be configured to convert the input power to any conventional and/or future welding-type output. The example power conversion circuitry 30 may implement one or more controlled voltage control loop(s), one or more controlled current control loop(s), one or more controlled power control loops, one or more controlled enthalpy control loops, and/or one or more controlled resistance control loops to control the voltage and/or current output to the welding circuit and/or to the preheating circuit. As described in more detail below, the power conversion circuitry 30 may be implemented using one or more converter circuits, such as multiple converter circuits in which each of the welding-type output and the preheating output is produced using separate ones of the converter circuits.

**In** some examples, the power conversion circuitry 30 is configured to convert the input power to a controlled waveform welding output, such as a pulsed welding process or an AC waveform.

The welding power supply 12 includes control circuitry 32 and an user interface 34. The control circuitry 32 controls the operations of the welding power supply 12 and may receive input from the user interface 34 through which an operator may input desired parameters of the input power (e.g., voltages, currents, particular pulsed or non-pulsed welding regimes, and so forth). The control circuitry 32 may be configured to receive and process a plurality of inputs regarding the performance and demands of the system 10. As disclosed below in more detail, the control circuitry 32 may determine parameters to control TIG welding based on material thickness, joint type, wire diameter, and/or any other parameters.

The control circuitry 32 includes one or more controller(s) and/or processor(s) 36 that controls the operations of the power supply 12. The control circuitry 32 receives and processes multiple inputs associated with the performance and demands of the system. The processor(s) 36 may include one or more microprocessors, such as one or more "general-purpose" microprocessors, one or more special-purpose microprocessors and/or ASICS, one or more microcontrollers, and/or any other type of processing and/or logic device. For example, the control circuitry 32 may include one or more digital signal processors (DSPs). The control circuitry 32 may include circuitry such as relay circuitry, voltage and current sensing circuitry, power storage circuitry, and/or other circuitry, and is configured to sense the primary power 22 received by the power supply 12.

The example control circuitry 32 includes one or more memory device(s) 38. The memory device(s) 38 may include volatile and/or nonvolatile memory and/or storage devices, such as random access memory (RAM), read only memory (ROM), flash memory, hard drives, solid state storage, and/or any other suitable optical, magnetic, and/or solid-state storage mediums. The memory device(s) 38 store data (e.g., data corresponding to a welding application), instructions (e.g., software or firmware to perform welding processes), and/or any other appropriate data. Examples of stored data for a welding application include material thickness, welding current, preheating power or energy, wire feed speed, wire diameter, wire type, and/or travel speed. The memory device 38 may store machine executable instructions (e.g., firmware or software) for execution by the processor(s) 36. Additionally or alternatively, one or more control schemes for various welding processes, along with associated settings and parameters, may be stored in the memory device(s) 38, along with machine executable instructions configured to provide a specific output (e.g., initiate wire feed, enable gas flow, capture welding current data) during operation.

The example user interface 34 enables control or adjustment of parameters of the welding system 10. The user interface 34 is coupled to the control circuitry 32 for operator selection and adjustment of the welding process through selection of the wire size, wire type, material, and gas parameters. The user interface 34 is coupled to the control circuitry 32 for control of the voltage, amperage, power, enthalpy, resistance, wire feed speed, and arc length for a welding application. The user interface 34 may receive inputs using any input device, such as via a keypad, keyboard, buttons, touch screen, voice activation system, wireless device, etc.

The user interface 34 may receive inputs specifying wire material (e.g., steel, aluminum), wire type (e.g., solid, cored), wire diameter, gas type, and/or any other parameters. Upon receiving the input, the control circuitry 32 determines the welding output for the welding application. For example, the control circuitry 32 may determine weld current, wire feed speed, weld pulse width, relative pulse amplitude, wave shape, preheating voltage, preheating current, preheating pulse, preheating resistance, preheating energy input, and/or any other welding and/or preheating parameters for a welding process based at least in part on the input received through the user interface 34.

In some examples, the welding power supply 12 may include polarity reversing circuitry. Polarity reversing circuitry reverses the polarity of the output welding-type power when directed by the control circuitry 32. For example, some TIG welding processes may enable a desired weld when the electrode has a certain positive or negative polarity, known as DC electrode negative (DCEN), and/or by using an AC waveform. Additionally or alternatively, the operator may simply connect the torch 14 to the power supply 12 without knowledge of the polarity, such as when the torch is located a substantial distance from the power supply 12. The control circuitry 32 may direct the polarity reversing circuitry to reverse the polarity in response to signals received through communications circuitry, and/or based on a selected or determined welding process.

In some examples, the power supply 12 includes communications circuitry. For example, communications circuitry may be configured to communicate with the welding torch 14, accessories, and/or other device(s) coupled to power cables and/or a communications port. The communications circuitry sends and receives command and/or feedback signals over welding power cables used to supply the welding-type power. Additionally or alternatively, the communications circuitry may communicate wirelessly with the welding torch 14 and/or other device(s).

For some welding processes (e.g., TIG), a shielding gas is utilized during welding. In the example of Figure 1A, the welding power supply 12 includes one or more gas control valves 46 configured to control a gas flow from a gas source 48. The control circuitry 32 controls the gas control valves 46. The welding power supply 12 may be coupled to one or multiple gas sources 48 because, for example, some welding processes may utilize different shielding gases than others. In some examples, the welding power supply 12 is configured to supply the gas with the welding power and/or the preheating power to the torch 14 via a combined torch cable 50. In other examples, the gas control valves 46 and gas source 48 may be separate from the welding power supply 12. For example, the gas control valves 46 may be disposed connected to the combined torch cable 50 via a connector.

The example power supply 12 includes a wire feed assembly 60 that supplies electrode wire 54 to the welding torch 14 via the wire nozzle 24 for the welding operation. The wire feed assembly 60 includes elements such as a wire spool 64 and a wire feed drive configured to power drive rolls 68. The wire feed assembly 60 feeds the electrode wire 54 to the welding torch 14 along the torch cable 50. The welding output may be supplied through the torch cable 50 coupled to the welding torch 14 and/or the work cable 42 coupled to the workpiece 44.

As disclosed in more detail below, the preheating output may be supplied to a wire preheater 40 via one or more preheating power terminals. The wire preheater 40 may be within the housing 86 of the welding power supply 12, attached to the wire nozzle 24, and/or separate from both the power supply 12 and the torch 14.

The example power supply 12 is coupled to the TIG welding torch 14 configured to supply the gas and electrical power to the welding application. The example welding power supply 12 is configured to receive input power, convert a first portion of the input power to welding power and output the welding power to the welding torch 14, and to convert a second portion of the input power to preheating power and output the preheating power to the wire preheater 40.

The example wire preheater 40 includes a first contact tip 18 and a second contact tip 20. The electrode wire 54 is fed from the wire feed assembly 60 to the wire preheater 40 and through the contact tips 18, 20, to deliver the preheated electrode wire 54 to the wire nozzle 24 attached to the welding torch 14. The preheating circuit includes the first contact tip 18, the second contact tip 20, and a portion 56 of the electrode wire 54 that is located between the first contact tip 18 and a second contact tip 20.

To output welding current, the example power supply 12 is coupled to the welding torch 14 and to a work cable 42 that is coupled to the workpiece 44. The welding torch 14 and the work cable 42 may be coupled to output terminals 76 of the power supply 12.

**In** operation, the electrode wire 54 passes through the second contact tip 20 and the first contact tip 18, between which the power conversion circuitry 30 outputs a preheating current to heat the electrode wire 54. Specifically, in the configuration shown in Figure 1A, the preheating current enters the electrode wire 54 via the second contact tip 20 and exits via the first contact tip 18. However, the preheating current may be conducted in the opposite direction, using AC, and/or a combination of AC and DC. At the first contact tip 18, a welding current may also enter (or exit) the electrode wire 54. Generally speaking, the preheating current is proportional to the distance between the contact tips 18, 20 and the electrode wire 54 size.

**In** other examples, the wire preheater 40 preheats the wire 54 using other techniques, such as establishing a current between a single contact tip (e.g., the contact tip 18) and the workpiece 44, preheating via inducing eddy currents within the wire 54, preheating using one or more electric arcs (e.g., different than the arc 26), and/or any other techniques. Preheating may be based on a target power, a target energy, a target enthalpy, a target voltage, a target current, a target wire temperature, and/or any other control scheme and/or mix of control parameters.

The welding current is output by the power conversion circuitry 30, which derives the preheating power and the welding power from the primary power 22. The welding current flows between a non-consumable electrode 52 (e.g., a tungsten electrode) of the welding torch 14 and the workpiece 44, which in turn generates the welding arc 26.

When an arc exists between the electrode 52 and the workpiece 44, an electrical circuit is completed and the welding current flows through the electrode 52, across the arc 26, across the metal work piece(s) 44, and returns to the power conversion circuitry 30 via the work cable 42. The welding current causes the parent metal of the work piece(s) 44 to melt, as well as the electrode wire 54 that is introduced to the arc 26 and/or to a weld puddle on the workpiece 44, thereby joining the work pieces as the melt solidifies. By preheating the electrode wire 54, the welding arc 26 is able to melt the welding wire 54 at higher speeds even when the welding wire 54 is cold enough to provide a pushing force in a travel direction 58 on the workpiece 44.

During operation, the power conversion circuitry 30 establishes a preheating circuit to conduct preheating current through a section 56 of the electrode wire 54. The preheating current flows from the power conversion circuitry 30 to the second contact tip 20 via a first conductor 70, through the section 56 of the electrode wire 54 to the first contact tip 18, and returns to the power conversion circuitry 30 via a second conductor 72 connecting the power conversion circuitry 30 to the first contact tip 18. Either, both, or neither of the conductors 70, 72 may be combined with other cables and/or conduits. For example, the conductor 70 and/or the conductor 72 may be part of the cable 50. In other examples, the conductor 72 is included within the cable 50, and the conductor 70 is routed separately to the wire preheater 40. To this end, the power supply 12 may include between one and four terminals to which one or more cables can be physically connected to establish the preheating, welding, and work connections. For example, multiple connections can be implemented into a single terminal using appropriate insulation between different connections.

In the illustrated example of Figure 1A, the power supply 12 includes two terminals 74, 76 configured to output the welding power to the contact tip 20 and the work cable 42. The conductor 72 couples the terminal 74 to the torch 14, which provides the power from the conductor 72 to the contact tip 18. The work cable 42 couples the terminal 76 to the workpiece 44. The example terminals 74, 76 may have designated polarities, or may have reversible polarities.

The example power supply 12 includes a housing 86, within which the control circuitry 32, the power conversion circuitry 30, the wire feed assembly 60, the user interface 34, and/or the gas control valving 46 are enclosed. In examples in which the power conversion circuitry 30 includes multiple power conversion circuits (e.g., a preheating power conversion circuit and a welding power conversion circuit), all of the power conversion circuits are included within the housing 86.

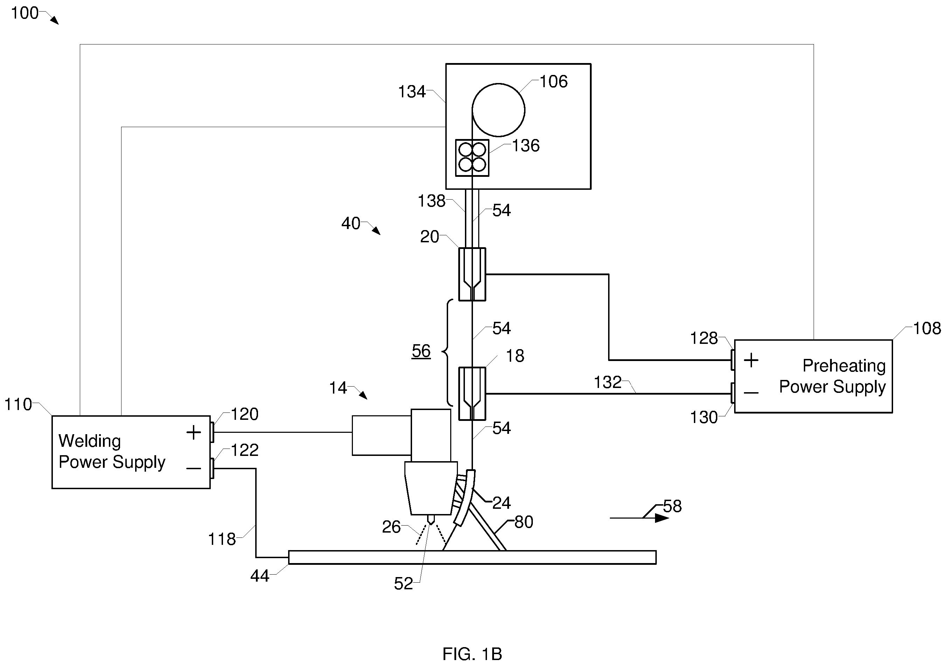

Figure 1B illustrates another example welding system 100 including a welding power supply 110 configured to convert input power to welding power and a preheating power supply 108 configured to convert input power to preheating power. The welding system 100 includes the example TIG welding torch 14 having the non-consumable electrode 52, and the wire preheater 40 having the contact tips 18, 20. The system 100 further includes the electrode wire 54 fed from a wire spool 106, a preheating power supply 108, and a welding power supply 110. The system 100 is illustrated in operation as producing the welding arc 26 between the non-consumable electrode 52 and a workpiece 44.

In the example of Figure 1B, the system 100 includes separate power supplies 108, 110 to provide the welding power to the torch 14 and the preheating power to the wire preheater 40, instead of the single power supply 12 in the example of Figure 1A.

In operation, the electrode wire 54 passes from the wire spool 106 through the second contact tip 20 and the first contact tip 18, between which the preheating power supply 108 generates a preheating current to heat the electrode wire 54. Specifically, in the configuration shown in Figure 1B, the preheating current enters the electrode wire 54 via the second contact tip 20 and exits via the first contact tip 18. The wire nozzle 24 guides the electrode wire 54 to the location of the arc 26. The example preheating power supply 108 may implement a controlled voltage control loop or a controlled current control loop to control the voltage and/or current output to the preheating circuit.

The welding current is generated, or otherwise provided by, a welding power supply 110, while the preheating current is generated, or otherwise provided by, the preheating power supply 108. The preheating power supply 108 and the welding power supply 110 may ultimately share a common power source (e.g., a common generator or line current connection), but the current from the common power source is converted, inverted, and/or regulated to yield the two separate currents - the preheating current and the welding current. For instance, the preheat operation may be facilitated with a single power source and associated converter circuitry, in which case three leads may extend from a single power source.

During operation, the system 100 establishes a welding circuit to conduct welding current from the welding power supply 110 to the non-consumable electrode 52, and returns to the power supply 110 via the welding arc 112, the workpiece 106, and a work lead 118. To enable connection between the welding power supply 110 welding torch 14 and the workpiece 44, the welding power supply 110 includes terminals 120, 122 (e.g., a positive terminal and a negative terminal).

During operation, the preheating power supply establishes a preheating circuit to conduct preheating current through a section 56 of the electrode wire 54. To enable connection between the preheating power supply 108 and the contact tips 18, 20, the preheating power supply 108 includes terminals 128, 130. The preheating current flows from the preheating power supply 108 to the second contact tip 20, the section 56 of the electrode wire 54, the first contact tip 18, and returns to the preheating power supply 108 via a cable 132 connecting the first contact tip 18 to the terminal 130 of the preheating power supply 108.

As illustrated in Figure 1B, the example system 100 includes a wire feeder 134 that feeds the electrode wire 54 to the torch 14 using a wire drive 136. The electrode wire 54 exits the wire feeder 134 and travels through a wire liner 138.

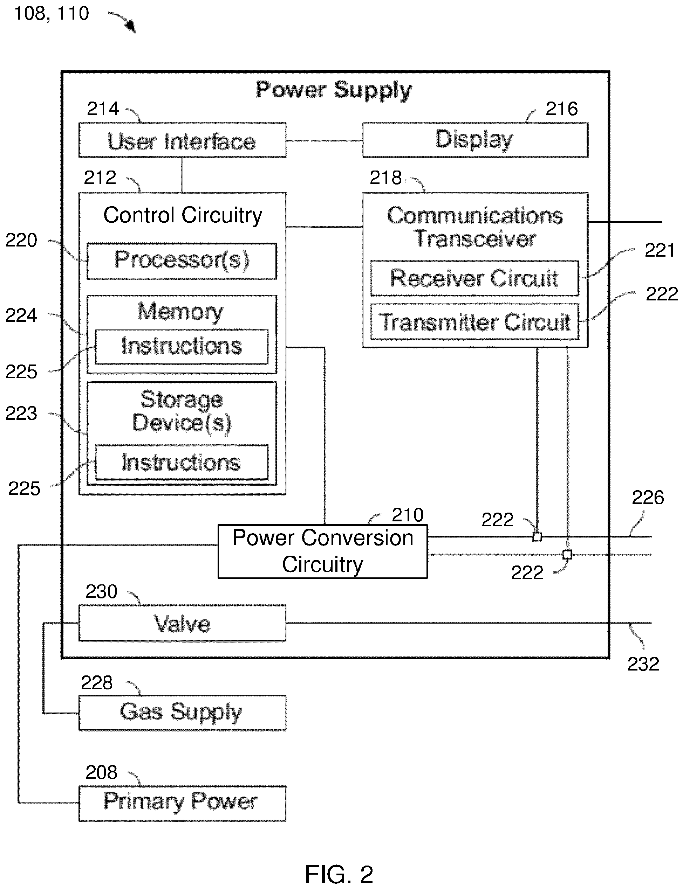

Figure 2 is a block diagram of an example implementation of either or both of the power supplies 108, 110 of Figure 1B. For example, the system 100 of Figure 1B may include multiple instances, one for each of the power supplies 108, 110, of the example power supply implementation of Figure 2. The example power supply 108, 110 powers, controls, and supplies consumables to a welding application. In some examples, the power supply 108, 110 directly supplies input power to the welding torch 14. In the illustrated example, the power supply 108, 110 is configured to supply power to welding operations and/or preheating operations. The example power supply 108, 110 also provides power to a wire feeder to supply the electrode wire 54 to the wire nozzle 24.

The power supply 108, 110 receives primary power 208 (e.g., from the AC power grid, an engine/generator set, a battery, or other energy generating or storage devices, or a combination thereof), conditions the primary power, and provides an output power to one or more welding devices and/or preheating devices in accordance with demands of the system. The primary power 208 may be supplied from an offsite location (e.g., the primary power may originate from the power grid). The power supply 108, 110 includes a power conversion circuitry 210, which may include transformers, rectifiers, switches, and so forth, capable of converting the AC input power to AC and/or DC output power as dictated by the demands of the system (e.g., particular welding processes and regimes). The power conversion circuitry 210 converts input power (e.g., the primary power 208) to welding-type power based on a weld voltage setpoint and outputs the welding-type power via a weld circuit.

In some examples, the power conversion circuitry 210 is configured to convert the primary power 208 to both welding-type power and auxiliary power outputs. However, in other examples, the power conversion circuitry 210 is adapted to convert primary power only to a weld power output, and a separate auxiliary converter is provided to convert primary power to auxiliary power. In some other examples, the power supply 108, 110 receives a converted auxiliary power output directly from a wall outlet. Any suitable power conversion system or mechanism may be employed by the power supply 108, 110 to generate and supply both weld and auxiliary power.

The power supply 108, 110 includes a control circuitry 212 to control the operation of the power supply 108, 110. The power supply 108, 110 also includes a user interface 214. The control circuitry 212 receives input from the user interface 214, through which a user may choose a process and/or input desired parameters (e.g., voltages, currents, particular pulsed or non-pulsed welding regimes, and so forth). The user interface 214 may receive inputs using any input device, such as via a keypad, keyboard, buttons, touch screen, voice activation system, wireless device, etc. Furthermore, the control circuitry 212 controls operating parameters based on input by the user as well as based on other current operating parameters. Specifically, the user interface 214 may include a display 216 for presenting, showing, or indicating, information to an operator. The control circuitry 212 may also include interface circuitry for communicating data to other devices in the system, such as the wire feeder. For example, in some situations, the power supply 108, 110 wirelessly communicates with other welding devices within the welding system. Further, in some situations, the power supply 108, 110 communicates with other welding devices using a wired connection, such as by using a network interface controller (NIC) to communicate data via a network (e.g., ETHERNET, 10baseT, 10base100, etc.). In the example of Figure 2, the control circuitry 212 communicates with the wire feeder via the weld circuit via a communications transceiver 218.

The control circuitry 212 includes at least one controller or processor 220 that controls the operations of the power supply 108, 110. The control circuitry 212 receives and processes multiple inputs associated with the performance and demands of the system. The processor 220 may include one or more microprocessors, such as one or more "general-purpose" microprocessors, one or more special-purpose microprocessors and/or ASICS, and/or any other type of processing device. For example, the processor 220 may include one or more digital signal processors (DSPs).

The example control circuitry 212 includes one or more storage device(s) 223 and one or more memory device(s) 224. The storage device(s) 223 (e.g., nonvolatile storage) may include ROM, flash memory, a hard drive, and/or any other suitable optical, magnetic, and/or solid-state storage medium, and/or a combination thereof. The storage device 223 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 224 may include a volatile memory, such as random access memory (RAM), and/or a nonvolatile memory, such as read-only memory (ROM). The memory device 224 and/or the storage device(s) 223 may store a variety of information and may be used for various purposes. For example, the memory device 224 and/or the storage device(s) 223 may store processor executable instructions 225 (e.g., firmware or software) for the processor 220 to execute. In addition, one or more control regimes for various welding processes, along with associated settings and parameters, may be stored in the storage device 223 and/or memory device 224, along with code configured to provide a specific output (e.g., initiate wire feed, enable gas flow, capture welding current data) during operation.

**In** some examples, the welding power flows from the power conversion circuitry 210 through a weld cable 226. The example weld cable 226 is attachable and detachable from weld studs at each of the power supply 108, 110 (e.g., to enable ease of replacement of the weld cable 226 in case of wear or damage). Furthermore, in some examples, welding data is provided with the weld cable 226 such that welding power and weld data are provided and transmitted together over the weld cable 226. The communications transceiver 218 is communicatively coupled to the weld cable 226 to communicate (e.g., send/receive) data over the weld cable 226. The communications transceiver 218 may be implemented based on various types of power line communications methods and techniques. For example, the communications transceiver 218 may utilize IEEE standard P1901.2 to provide data communications over the weld cable 226. In this manner, the weld cable 226 may be utilized to provide welding power from the power supply 108, 110 to the wire feeder 134 and the welding torch 14. Additionally or alternatively, the weld cable 226 may be used to transmit and/or receive data communications to/from the wire feeder 134 and the welding torch 14. The communications transceiver 218 is communicatively coupled to the weld cable 226, for example, via cable data couplers 227, to characterize the weld cable 226, as described in more detail below. The cable data coupler 227 may be, for example, a voltage or current sensor.

**In** some examples, the power supply 108, 110 includes or is implemented in a wire feeder.

The example communications transceiver 218 includes a receiver circuit 221 and a transmitter circuit 222. Generally, the receiver circuit 221 receives data transmitted by the wire feeder via the weld cable 226 and the transmitter circuit 222 transmits data to the wire feeder via the weld cable 226. As described in more detail below, the communications transceiver 218 enables remote configuration of the power supply 108, 110 from the location of the wire feeder, adjustment of wire feed speeds, and/or compensation of preheat voltages by the preheat power supply 108 using feedback information transmitted by the wire feeder 134. In some examples, the receiver circuit 221 receives communication(s) via the weld circuit while weld current is flowing through the weld circuit (e.g., during a welding-type operation) and/or after the weld current has stopped flowing through the weld circuit (e.g., after a welding-type operation). Examples of such communications include wire feed speed adjustment commands and/or wire temperature feedback while the weld current is flowing through the weld circuit.

Example implementations of the communications transceiver 218 are described in U.S. Patent No. 9,012,807. However, other implementations of the communications transceiver 218 may be used.

The example wire feeder 134 also includes a communications transceiver 219, which may be similar or identical in construction and/or function as the communications transceiver 218.

In some examples, a gas supply 228 provides shielding gases, such as argon, helium, carbon dioxide, and so forth, depending upon the welding application. The shielding gas flows to a valve 230, which controls the flow of gas, and if desired, may be selected to allow for modulating or regulating the amount of gas supplied to a welding application. The valve 230 may be opened, closed, or otherwise operated by the control circuitry 212 to enable, inhibit, or control gas flow (e.g., shielding gas) through the valve 230. Shielding gas exits the valve 230 and flows through a cable 232 (which in some implementations may be packaged with the welding power output) to the wire feeder which provides the shielding gas to the welding application. In some examples, the power supply 108, 110 does not include the gas supply 228, the valve 230, and/or the cable 232.

In either of the example systems of Figures 1A and/or 1B, the power supply 12, 108, 110 control the parameters of the TIG welding and wire preheating to deliver the wire 54 to the workpiece 44, such that the wire 54 applies a physical force (e.g., a pushing force) to the workpiece 44 prior to melting by the arc 26 and/or the weld puddle. The application of the physical force on the workpiece 44 by the wire 54 has the effect of pushing the welding torch 14 along the workpiece 44 in the desired direction of travel 58.

To provide the pushing force via the wire 54, allow the wire 54 to melt, and provide an acceptable welding result, the control circuitry 32, 212 of the power supply 12, 108, 110 determines the balance of parameter values to achieve the desired welding result. For example, the control circuitry 32, 212 may determine the arc current, the wire feed speed, and/or the wire preheating energy to provide the correct travel speed for the weld. In some examples, the material thickness of the workpiece 44 may be used to determine one or more of the parameters.

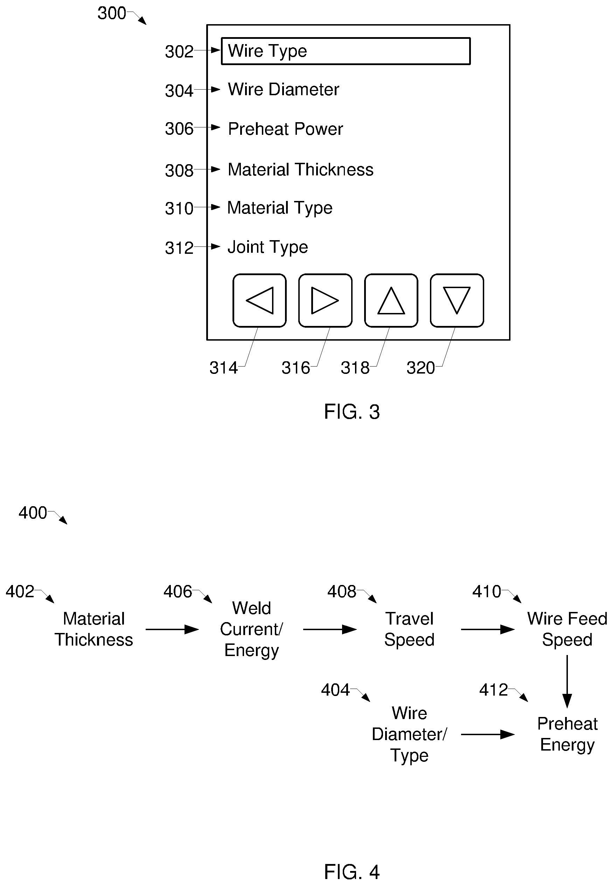

Figure 3 illustrates an example user interface 300 that may be used to input welding properties for determining the parameter values. The example user interface 300 may implement the user interface 34 of Figure 1A and/or the user interface 214 of Figure 2. For example, the user interface 300 may be a touchscreen, a display and input devices (e.g., buttons, mouse and cursor, etc.), and/or any other type of input and/or output devices.

The example user interface 300 enables a user to select a wire type 302 (e.g., from a selection of multiple wire types), a wire diameter 304, a preheat power 306, a material thickness 308 of the workpiece 44, a material type 310 of the workpiece 44, and/or a joint type 312. The example user interface 300 may further enable the operator to select or refine weld and/or preheat parameters, such as weld voltage, wire feed speed, weld current, preheat voltage, preheat current, and/or any other desired weld parameters and/or preheat parameters. To this end, the user interface 300 includes example buttons 314, 316, 318, 320 to navigate the user interface 300, to select properties and/or parameters, and/or to specify values for the properties and/or parameters. However, other input devices, such as a touchscreen, a knob, buttons, and/or other input devices may be used.

Using the specified properties of the weld, the control circuitry 32, 212 determines one or more additional parameters for control of the power conversion circuitry 30, 210 and Figure 4 is a parameter model 400 that may be implemented by the control circuitry 32, 212 of Figures 1A, 1B, and/or 2, illustrating an example parameter determination for TIG welding parameters.

In the examine model 400, the control circuitry 32, 212 receives a material thickness 402 of the workpiece 44 (e.g., via the user interface 300 of Figure 3). The material thickness 402 may further include the material type, which can determine the composition, specific heat capacity, and/or thermal conductivity of the workpiece 44. In some examples, the control circuitry 32, 212 also receives a wire diameter and/or type 404 via the user interface 300.

The control circuitry 32, 212 determines a welding current 406 and/or energy per linear length based on the material thickness 402. For example, the welding current 406 may be determined based on the current required to create a welding bead of a desired size on the workpiece 44 for the specified material thickness 402.

The control circuitry 32, 212 further determines a travel speed 408 based on the welding current 406. In some other examples, the control circuitry 32, 212 may determine or receive a travel speed 408, and determine the welding current 406 required to create the desired bead with the specified material thickness 402 and travel speed 408.

The control circuitry 32, 212 determines a wire feed speed 410 of the wire 54 based on the travel speed 408, the weld current 406, and the wire diameter 404. The control circuitry 32, 212 may select the wire feed speed 410 to provide a pushing force that results in the determined travel speed 408 while providing the appropriate mass of filler metal to the weld based on the material thickness 402 and/or the joint characteristics. In some examples, the control circuitry 32 determines the wire feed speed 410 based further on an angle of entry of the wire 54 to the workpiece 44. A shallower angle results in a larger pushing force in the travel direction 58 for a given wire feed speed and weld current 406, and a steeper angle results in a lower pushing force in the travel direction 58.

Additionally or alternatively, the wire feed speed 410 may be based on a type of the wire, such as the composition of the wire, the melting point of the wire, the specific heat capacity of the wire, and/or any other properties of the wire that affect the ability of the wire 54 to apply force to the workpiece 44. In some examples, the angle may be an adjustable parameter that can be directed by the control circuitry 32, 212 to control the travel speed 408 and achieve the desired welding result.

The control circuitry 32, 212 further determines a preheat energy 412 to preheat the wire 54 to a temperature that is sufficiently cool to retain columnar strength until the wire 54 contacts the workpiece 44 (to provide the pushing force) and is sufficiently hot to allow the arc 26 and/or residual heat from the weld puddle to melt the wire 54 after contact with the workpiece 44.

If the wire feed speed 410 required to provide a sufficient filler metal mass is too high, then the desired travel speed 408 will be exceeded. In such examples, the control circuitry 32, 212 may output an indication or alert (e.g., via the user interface 300) that a wire having a higher diameter must be used.

Returning to Figures 1A and 1B, the example torch 14 may be further provided with one or more standoffs 80. The standoff(s) 80 are attached to the welding torch 14, and is positioned to set a lower distance limit between the electrode 52 and the workpiece 44. The standoff(s) 80 may allow the operator to drag the welding torch 14 along the workpiece 44 at a consistent height, while the wire 54 pushes the welding torch 14 along the workpiece 44 at a desired travel speed.

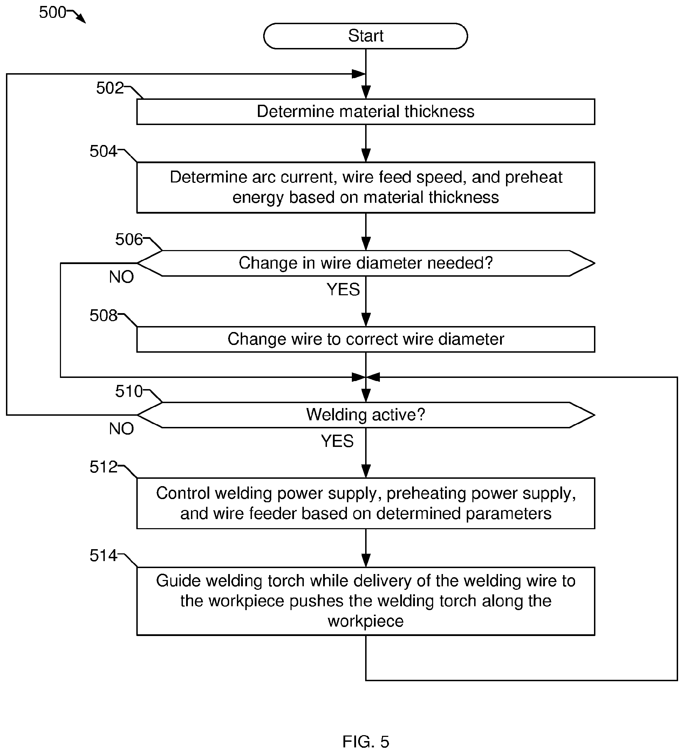

Figure 5 is a flowchart representative of an example method 500 which may be performed using the example welding systems 10, 100, 108, 110 of Figures 1A, 1B, and/or 2 to control TIG welding. The example method 500 is described below with reference to the example welding system 10 of FIG. 1A. However, the method 500 may be performed using other welding systems and/or power supplies.

At block 502, the example control circuitry 32 of FIG. 1A determines a material thickness of the workpiece 44. For example, the control circuitry 32 may receive the material thickness as an input via the user interface 34 (e.g., the user interface 300 of FIG. 3).

At block 504, the control circuitry 32 determines an arc current (e.g., the weld current 406 of the model 400 of FIG. 4), a wire feed speed (e.g., the wire feed speed 410), and a preheat energy (e.g., the preheat energy 412) based on the material thickness. In some examples, the control circuitry 32 also determines the wire diameter (e.g., the wire diameter 404).

In some examples, the wire diameter 404 may be specified via the user interface 34, and the control circuitry 32 verifies that the specified wire diameter results in an acceptable value of the travel speed. At block 506, the control circuitry 32 determines whether a change in the wire diameter is needed. For example, the control circuitry 32 may determine that the wire feed speed 410 to weld the material thickness 402 and weld current 406 would result in a pushing force and resulting travel speed that are too high. If a change in wire diameter is needed (block 506), at block 508 the wire 54 is changed to the correct wire diameter. For example, the wire spool 64 may be changed to a different spool with the correct wire.

After changing the wire (block 508), or if a change in wire diameter is not needed (block 506), at block 510 the control circuitry 32 determines whether welding is active. For example, the control circuitry 32 may determine whether the power conversion circuitry 30 is being controlled to output welding power and/or preheating power. In the example of FIG. 1B, the control circuitry 212 of FIG. 2 (e.g., for the welding power supply 110 or the preheating power supply 108) may communicate with other equipment to determine the status of welding. If welding is not active (block 510), control returns to block 502.

While welding is active (block 510), at block 512 the control circuitry 32 controls the welding power supply (e.g., the power conversion circuitry 30, the welding power supply 110), the preheating power supply (e.g., the power conversion circuitry 30, the preheating power supply 108), and the wire feeder (e.g., the wire feed assembly 60, the wire feeder 134) based on the determined parameters.

At block 514, the operator guides the welding torch 14 while delivery of the welding wire 54 to the workpiece 44 pushes the welding torch 14 along the workpiece 44 in the travel direction 58. In some examples, the operator may use the standoff 80 to maintain a consistent distance between the electrode 52 and the workpiece 44. The feeding of the wire 54 to the workpiece 44 provides a pushing force (e.g., based on an angle between the wire 54 and the workpiece). Control then returns to block 510 while welding is occurring.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

While the present method and/or system has been described with reference to certain implementations, it will be understood by those skilled in the art that various changes may be made without departing from the scope of the claims. In addition, many modifications may be made to adapt a particular situation or material to the teachings of the present disclosure without departing from the claims. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims.

## Claims

1. A welding system (10, 100), comprising:
a welding torch (14) comprising a non-consumable electrode (52) configured to establish an arc between the non-consumable electrode (52) and a workpiece (44);
a wire feeder (60, 134) coupled to the welding torch (14) and configured to direct a welding wire (54) toward the workpiece (44) at a location of the arc;
and
control circuitry (32, 212) configured to control at least one of a current to the arc, a wire feed speed of the welding wire (54), or preheat energy applied to the welding wire (54), to deliver the welding wire (54) to the workpiece (44) such that the welding wire (54) applies a physical force to the workpiece (44) prior to melting to push the welding torch (14) along the workpiece (44); and **characterized by**:
a wire preheater (40) configured to apply the preheat energy to the welding wire (54);
wherein the control circuitry (32, 212) is configured to control the preheat energy applied to the welding wire (54) based on the wire feed speed of the welding wire (54) and a wire diameter of the welding wire (54).

2. The welding system (10, 100) as defined in claim 1, wherein the control circuitry (32, 212) is configured to determine the at least one of the current to the arc, the wire feed speed of the welding wire (54), or the preheat energy applied to the welding wire (54) based on a property of the workpiece (44).

3. The welding system (10, 100) as defined in claim 2, wherein the property of the workpiece (44) comprises a workpiece thickness, a joint type, or a joint dimension.

4. The welding system (10, 100) as defined in claim 1, wherein the control circuitry (32, 212) is configured to:
determine a travel speed based on a property of the workpiece (44) and the current to the arc; and
determine the wire feed speed and the preheat energy based on the travel speed and a diameter of the welding wire (54).

5. The welding system (10, 100) as defined in claim 4, wherein the control circuitry (32, 212) is configured to determine the preheat energy based on a type of the welding wire (54).

6. The welding system (10, 100) as defined in claim 1, further comprising a wire nozzle (24) attached to the welding torch (14) and configured to direct the welding wire (54) from the wire feeder (60, 134) toward the workpiece (44).

7. The welding system (10, 100) as defined in claim 6, wherein the control circuitry (32, 212) is configured to determine the at least one of the current to the arc, the wire feed speed of the welding wire, or the preheat energy applied to the welding wire based on an angle between the non-consumable electrode (52) and the wire nozzle (24).

8. The welding system (10, 100) as defined in claim 1, further comprising a standoff (80) attached to the welding torch (14), the standoff (80) positioned to set a lower distance limit between the non-consumable electrode (52) and the workpiece (44).

9. The welding system (10, 100) as defined in claim 1, further comprising an input device configured to provide an input signal to the control circuitry (32, 212), the control circuitry (32, 212) configured to adjust the at least one of the current to the arc, the wire feed speed of the welding wire (54), or the preheat energy applied to the welding wire (54).

10. A method to perform welding, the method comprising:
selecting an arc current to be provided by a non-consumable electrode (52) of a welding torch (14), a welding wire (54) having a wire diameter, and a wire feed speed of the welding wire (54);
initiating welding of a workpiece (44) using the non-consumable electrode (52);
guiding the welding torch (14) while delivery of the welding wire (54) to the workpiece (44) pushes the welding torch (14) along the workpiece (44); and **characterized by**:
controlling a preheat energy applied to the welding wire (54) based on the wire feed speed of the welding wire (54) and a wire diameter of the welding wire (54).

11. The method as defined in claim 10, further comprising adjusting an angle between the wire (54) and the workpiece (44) to change a push force of the welding wire (54) on the workpiece (44).

## Patentansprüche

1. Schweißsystem (10, 100), aufweisend:
einen Schweißbrenner (14), der eine nicht verbrauchbare Elektrode (52) umfasst, die so konfiguriert ist, dass sie einen Lichtbogen zwischen der nicht verbrauchbaren Elektrode (52) und einem Werkstück (44) herstellt;
einen Drahtvorschub (60, 134), der mit dem Schweißbrenner (14) gekoppelt und so konfiguriert ist, dass er einen Schweißdraht (54) an einem Ort des Lichtbogens zum Werkstück (44) leitet;
und
Steuerschaltung (32, 212), die so konfiguriert ist, dass sie mindestens eines von einem Strom zu dem Lichtbogen, einer Drahtvorschubgeschwindigkeit des Schweißdrahts (54) oder einer Vorwärmenergie, die an den Schweißdraht (54) angelegt wird, steuert, um den Schweißdraht (54) an das Werkstück (44) zu liefern, so dass der Schweißdraht (54) vor dem Schmelzen eine physische Kraft auf das Werkstück (44) ausübt, um den Schweißbrenner (14) entlang des Werkstücks (44) zu schieben; und **gekennzeichnet durch**: einen Drahtvorwärmer (40), der so konfiguriert ist, dass er die Vorwärmenergie an den Schweißdraht (54) anlegt;
wobei die Steuerschaltung (32, 212) so konfiguriert ist, dass sie die Vorwärmenergie, die an den Schweißdraht (54) angelegt wird, basierend auf der Drahtvorschubgeschwindigkeit des Schweißdrahts (54) und einem Drahtdurchmesser des Schweißdrahts (54) steuert.

2. Schweißsystem (10, 100) nach Anspruch 1, wobei die Steuerschaltung (32, 212) so konfiguriert ist, dass sie das mindestens eine des Stroms zu dem Lichtbogen, der Drahtvorschubgeschwindigkeit des Schweißdrahts (54) oder der Vorwärmenergie, die an den Schweißdraht (54) angelegt wird, basierend auf einer Eigenschaft des Werkstücks (44) bestimmt.

3. Schweißsystem (10, 100) nach Anspruch 2, wobei die Eigenschaft des Werkstücks (44) eine Werkstückdicke, eine Art der Schweißverbindung oder eine Verbindungsabmessung umfasst.

4. Schweißsystem (10, 100) nach Anspruch 1, wobei die Steuerschaltung (32, 212) konfiguriert ist zum:
Bestimmen einer Bewegungsgeschwindigkeit basierend auf einer Eigenschaft des Werkstücks (44) und dem Strom zum Lichtbogen; und
Bestimmen der Drahtvorschubgeschwindigkeit und der Vorwärmenergie basierend auf der Bewegungsgeschwindigkeit und einem Durchmesser des Schweißdrahts (54).

5. Schweißsystem (10, 100) nach Anspruch 4, wobei die Steuerschaltung (32, 212) so konfiguriert ist, dass sie die Vorwärmenergie basierend auf der Art des Schweißdrahts (54) bestimmt.

6. Schweißsystem (10, 100) nach Anspruch 1, das ferner eine Drahtdüse (24) aufweist, die an dem Schweißbrenner (14) angebracht und so konfiguriert ist, dass sie den Schweißdraht (54) von dem Drahtvorschub (60, 134) zum Werkstück (44) leitet.

7. Schweißsystem (10, 100) nach Anspruch 6, wobei die Steuerschaltung (32, 212) so konfiguriert ist, dass sie das mindestens eine des Stroms zu dem Lichtbogen, der Drahtvorschubgeschwindigkeit des Schweißdrahts oder der Vorwärmenergie, die an den Schweißdraht angelegt wird, basierend auf einem Winkel zwischen der nicht verbrauchbaren Elektrode (52) und der Drahtdüse (24) bestimmt.

8. Schweißsystem (10, 100) nach Anspruch 1, das ferner einen Abstandshalter (80) aufweist, der an dem Schweißbrenner (14) angebracht ist, wobei der Abstandshalter (80) so positioniert ist, dass er eine untere Abstandsgrenze zwischen der nicht verbrauchbaren Elektrode (52) und dem Werkstück (44) einstellt.

9. Schweißsystem (10, 100) nach Anspruch 1, das ferner eine Eingabevorrichtung aufweist, die so konfiguriert ist, dass sie ein Eingangssignal für die Steuerschaltung (32, 212) bereitstellt, wobei die Steuerschaltung (32, 212) so konfiguriert ist, dass sie das mindestens eine des Stroms zu dem Lichtbogen, der Drahtvorschubgeschwindigkeit des Schweißdrahts (54) oder der Vorwärmenergie, die an den Schweißdraht (54) angelegt wird, anpasst.

10. Verfahren zum Durchführen von Schweißarbeiten, wobei das Verfahren Folgendes aufweist:
Auswählen eines Lichtbogenstroms, der durch eine nicht verbrauchbare Elektrode (52) eines Schweißbrenners (14), einen Schweißdraht (54) mit einem Drahtdurchmesser und eine Drahtvorschubgeschwindigkeit des Schweißdrahts (54) bereitgestellt werden soll;
Initiieren des Schweißens eines Werkstücks (44) unter Verwendung der nicht verbrauchbaren Elektrode (52);
Führen des Schweißbrenners (14), während die Lieferung des Schweißdrahts (54) an das Werkstück (44) den Schweißbrenner (14) entlang des Werkstücks (44) schiebt; und **gekennzeichnet durch**:
Steuern einer Vorwärmenergie, die an den Schweißdraht (54) angelegt wird, basierend auf der Drahtvorschubgeschwindigkeit des Schweißdrahts (54) und einem Drahtdurchmesser des Schweißdrahts (54).

11. Verfahren nach Anspruch 10, das ferner das Anpassen eines Winkels zwischen dem Draht (54) und dem Werkstück (44) aufweist, um eine Druckkraft des Schweißdrahts (54) auf das Werkstück (44) zu ändern.

## Revendications

1. Système de soudage (10, 100) comprenant :
un chalumeau de soudage (14) comprenant une électrode non consommable (52) configurée pour établir un arc entre l'électrode non consommable (52) et une pièce à usiner (44) ;
un dispositif d'alimentation en fil (60, 134) couplé au chalumeau de soudage (14) et configuré pour diriger un fil de soudage (54) vers la pièce à usiner (44) au niveau d'un emplacement de l'arc ;
et
une circuiterie de commande (32, 212) configurée pour commander au moins l'un parmi un courant vers l'arc, une vitesse d'alimentation en fil du fil de soudage (54), ou une énergie de préchauffage appliquée au fil de soudage (54), pour délivrer le fil de soudage (54) à la pièce à usiner (44) de telle sorte que le fil de soudage (54) applique une force physique à la pièce à usiner (44) avant la fusion pour pousser le chalumeau de soudage (14) le long de la pièce à usiner (44) ; et **caractérisé par** :
un préchauffeur de fil (40) configuré pour appliquer l'énergie de préchauffage au fil de soudage (54) ;
dans lequel la circuiterie de commande (32, 212) est configurée pour commander l'énergie de préchauffage appliquée au fil de soudage (54) sur la base de la vitesse d'alimentation en fil du fil de soudage (54) et d'un diamètre de fil du fil de soudage (54).

2. Système de soudage (10, 100) selon la revendication 1, dans lequel la circuiterie de commande (32, 212) est configurée pour déterminer l'au moins un parmi le courant vers l'arc, la vitesse d'alimentation en fil du fil de soudage (54), ou l'énergie de préchauffage appliquée au fil de soudage (54) sur la base d'une propriété de la pièce à usiner (44).

3. Système de soudage (10, 100) selon la revendication 2, dans lequel la propriété de la pièce à usiner (44) comprend une épaisseur de pièce à usiner, un type de joint ou une dimension de joint.

4. Système de soudage (10, 100) selon la revendication 1, dans lequel la circuiterie de commande (32, 212) est configurée pour :
déterminer une vitesse de déplacement sur la base d'une propriété de la pièce à usiner (44) et du courant vers l'arc ; et
déterminer la vitesse d'alimentation en fil et l'énergie de préchauffage sur la base de la vitesse de déplacement et d'un diamètre du fil de soudage (54).

5. Système de soudage (10, 100) selon la revendication 4, dans lequel la circuiterie de commande (32 ; 212) est configurée pour déterminer l'énergie de préchauffage sur la base d'un type du fil de soudage (54).

6. Système de soudage (10, 100) selon la revendication 1, comprenant en outre un guide-fil avant (24) fixé au chalumeau de soudage (14) et configuré pour diriger le fil de soudage (54) depuis le dispositif d'alimentation en fil (60, 134) vers la pièce à usiner (44).

7. Système de soudage (10, 100) selon la revendication 6, dans lequel la circuiterie de commande (32, 212) est configurée pour déterminer l'au moins un parmi le courant vers l'arc, la vitesse d'alimentation en fil du fil de soudage, ou l'énergie de préchauffage appliquée au fil de soudage sur la base d'un angle entre l'électrode non consommable (52) et le guide-fil avant (24).

8. Système de soudage (10, 100) selon la revendication 1, comprenant en outre un élément d'écartement (80) fixé au chalumeau de soudage (14), l'élément d'écartement (80) étant positionné de manière à établir une limite de distance inférieure entre l'électrode non consommable (52) et la pièce à usiner (44).

9. Système de soudage (10, 100) selon la revendication 1, comprenant en outre un dispositif d'entrée configuré pour fournir un signal d'entrée à la circuiterie de commande (32, 212), la circuiterie de commande (32, 212) étant configurée pour ajuster l'au moins un parmi le courant vers l'arc, la vitesse d'alimentation en fil du fil de soudage (54), ou l'énergie de préchauffage appliquée au fil de soudage (54).

10. Procédé pour réaliser un soudage, le procédé comprenant :
la sélection d'un courant d'arc devant être fourni par une électrode non consommable (52) d'un chalumeau de soudage (14), d'un fil de soudage (54) ayant un diamètre de fil et d'une vitesse d'alimentation en fil du fil de soudage (54) ;
le déclenchement du soudage d'une pièce à usiner (44) à l'aide de l'électrode non consommable (52) ;
le guidage du chalumeau de soudage (14) tout en délivrant le fil de soudage (54) à la pièce à usiner (44) pousse le chalumeau de soudage (14) le long de la pièce à usiner (44) ; et **caractérisé par** :
la commande d'une énergie de préchauffage appliquée au fil de soudage (54) sur la base de la vitesse d'alimentation en fil du fil de soudage (54) et d'un diamètre de fil du fil de soudage (54).

11. Procédé selon la revendication 10, comprenant en outre l'ajustement d'un angle entre le fil (54) et la pièce à usiner (44) pour modifier une force de poussée du fil de soudage (54) sur la pièce à usiner (44).
